# EUROPÄISCHE PATENTSCHRIFT

(11) **EP 1 125 497 B1**
(45) Veröffentlichungstag und Bekanntmachung des Hinweises auf die Patenterteilung: **18.06.2003**
(21) Anmeldenummer: 01103066.5
(22) Anmeldetag: 09.02.2001
(51) Int. Cl.: A01N 37/16

(54) **Mittel zur viruziden Händedesinfektion**
Product for virucidal disinfection of the hands
Produit pour la désinfection virucide des mains

(30) Priorität: 11.02.2000 DE 10006088
(43) Veröffentlichungstag der Anmeldung: 22.08.2001
(73) Patentinhaber: Kesla Forschung u. Service KG, 06803 Greppin (DE)
(72) Erfinder: Schreiner, Gerd Dr., 08491 Netzschkau (DE); Mitsching, Mario Dr., 99439 Ettersberg (DE); Wutzler, Peter Prof. Dr., 99098 Erfurt (DE)
(74) Vertreter: Krause, Eberhard

(56) Entgegenhaltungen:
- DD-A- 41 981
- DD-A- 96 833
- DD-A- 282 644
- DE-A- 2 725 067
- DE-A- 3 903 825
- DE-A- 19 724 102

## Beschreibung

Die Erfindung betrifft ein Mittel zur viruziden Händedesinfektion auf Basis des omnipotenten Wirkstoffes Peressigsäure. Das Mittel erfüllt nach einer Einwirkungszeit von einer Minute die derzeitigen Anforderungen
- der Deutschen Vereinigung zu m/U Bekämpfung de Händedesinfektionsmittel,
- des Robert-Koch-Institutes (RKI) an Mittel zur hygienischen Händedesinfektion mit dem Wirkungsbereich AB für behördlich angeordnete Maßnahmen nach § 10 Bundesseuchengesetzes
- der Deutschen Gesellschaft für Hygiene und Mikrobiologie (DGHM) für die prophylaktische Händedesinfektion im Bereich der Humanmedizin

Viruswirksame Händedesinfektion ist eine der wichtigsten Maßnahmen zur Vorbeugung nosokomialer Virusinfektionen. Da Viruserkrankungen nur in sehr begrenztem Maße erfolgreich behandelt werden können, besitzt die Prophylaxe bei der indirekten, nicht invasiven Virusübertragung von kontaminierten Oberflächen über die Hände zu den Eintrittspforten des Körpers (Nase, Auge, Mund- und Genitalschleimhaut, Wunden) eine herausragende Bedeutung. Obwohl im Gegensatz zu bakteriellen Krankheitserregern keine Virusvermehrung außerhalb lebender Zellen erfolgt, können bestimmte Viren im angetrockneten Zustand bis zu mehreren Tagen infektiös bleiben (O. Thraenhart, W.H. Gerlich : Deutsches Ärzteblatt, 95 (1998) 656).

Im Standardwerk von Wallhäuser (Wallhäuser, K.H.: Sterilisation, Desinfektion, Konservierung. 5. Aufl., Thieme Verlag Stuttgart, New York 1995) werden folgende Wirkstoffe genannt, die sowohl behüllte als auch unbehüllte Viren inaktivieren :Jod, Chlor, Chlorabspalter und Peressigsäure.

Jodpräparate wie Lugol'sche Lösung, jodophore oder polymere Jod-Additionsverbindungen wie Polyvinylpyrrolidon-Jod verfärben die behandelten Hautareale intensiv und nachhaltig braun und können bei häufiger Anwendung zu Jodallergien führen. Die Geschwindigkeit der Virusinaktivierung reicht bei dieser Stoffgruppe nicht aus, um innerhalb einer Minute die in der BGA/DVV-Richtlinie im quantitativen Suspensionstest bei allen Modellviren (Polio-, Adeno-, Papova- und Vakziniavirus) geforderte Titerreduktion um mindestens 4 Zehnerlogstufen zu erreichen. In der 13. "Liste der vom Robert Koch- Institut geprüften und anerkannten Desinfektionsmittel und -verfahren" (im weiteren: 13. RKI-Liste) wird in der Rubrik "Hygienische Händedesinfektion" allen aufgeführten Mitteln auf Jodbasis nur der Wirkungsbereich A ( zur Abtötung von vegetativen bakteriellen Keimen einschl. Mykobakterien sowie von Pilzen einschl. pilzlicher Sporen geeignet), nicht aber der Wirkungsbereich B ( zur Inaktivierung von Viren geeignet) zuerkannt.

Chlor und die beim Lösen von Chlor in Alkalien entstehenden Hypochlorite gelten in der Händedesinfektion als obsolet Chlorabspaltende Verbindungen wie Chloramin B (N-Chlorbenzolsulfonamid-Natrium) und Chloramin T (N-Chlor-4-toluolsulfonamid-Natrium) wirken normalerweise ebenfalls zu langsam, um die Bedingungen der BGA/DVV- Richtlinie bei Einwirkzeiten von einer Minute zu erfüllen. Desinfektionsmittel auf Basis chlorabspaltender Verbindungen sind in der 13. RKI-Liste im Bereich A mit der Einschränkung "Gegen Mykobakterien und Pilze unzureichend wirksam" und im Bereich B mit der Einschränkung "Gegen Parvoviren unzureichend wirksam" aufgeführt.

In der DD-PS 41981(1) wurden erstmals wässrige Lösungen von Peressigsäure oder deren Kombinationen mit Alkoholen als viruzide Mittel zur Hände- und Hautdesinfektion vorgeschlagen. Wässrige oder alkoholisch-wässrige Lösungen mit bis zu 0,2% Peressigsäure wirken zwar sicher bakterizid und viruzid, führen aber innerhalb des vorgegebenen Zeitlimits von einer Minute bei unbehüllten Modell-/Surrugatviren wie dem Poliovirus nicht zuverlässig zur erforderlichen Titerreduktion um 4 logarithmische Einheiten.

Deshalb wird dem DD-PS 96833(2) gemäßen Desinfektionsmittel Wofasteril in 0,5% wässriger Verdünnung (entsprechend 0,2% Peressigsäure) in der 13. RKI-Liste nur der Wirkungsbereich A zuerkannt.

In höheren Anwendungskonzentrationen an Peressigsäure steigt zwar die Geschwindigkeit der Virusinaktivierung, zugleich nehmen auch negative Effekte dieses Wirkstoffes wie Hautreizung und Geruchsbelästigung zu.

Nachteilig ist auch, dass gebrauchsfertig eingestelte Peressigsäure-Lösungen nur sehr begrenzt haltbar sind. In der Regel werden Zubereitungen zur Hautdesinfektion wie "Peressigsäure-Spiritus SR" von Apotheken angefertigt ("SR Standardrezepturen für den Arzt und den Apotheker." 16. Aufl. Ullstein Mosby Berlin 1993). Die SR-Zubereitungen auf Basis Peressigsäure sind kostenaufwendig und bei Lagerung im Kühlschrank zwischen 2 und 8°C nur 20 Tage, oberhalb von 8°C sogar nur 3 Tage verwendbar.

In der DD-PS 282 644(3) werden Umsetzungsprodukte von Glycerintriacetat oder Glycoldiacetat mit Peressigsäure beschrieben. Diese besitzen nicht den starken Geruch wässriger Peressigsäuren, sind hautverträglicher und wesentlich haltbarer als übliche Peressigsäurelösungen identischer Konzentration. Nachteil dieser Zubereitungen ist vor allem die Wirkungsverzögerung gegenüber wässrigen oder wässrig-alkoholischen Peressigsäurelösungen vergleichbarer Konzentration, die bei der Inaktivierung von Polioviren zur Verlängerung der Einwirkzeit um das 5 bis 10fache führt.

Mittel zur Schnelldekontamination und -desinfektion von Haut und Händen, die durch einen Gehalt von physiologisch verträglichen Persäuren oder deren Salzen in Mengen von etwa 0,1 bis 10 Gew-% in wässriger Lösung gekennzeichnet sind, werden in DE 197 24 102 A1 (4) beschrieben. Als Persäurekomponente enthalten diese Mittel das Magnesiumsalz der Monoperoxidophthalsäure (MMPA). Wässrige Lösungen vorgenannter Konzentration erfüllen die Richtlinien der DGHM bzw. Euronorm-Entwürfe hinsichtlich der Keimreduktion in 30-60 Sekunden bei Bakterien von über 4 log-Stufen. Obwohl insbesondere die vorteilhaften antibakteriellen, antimykotischen und antiviralen (unbehüllte Viren ) Eigenschaften und die gute Hautverträglichkeit des Mittels hervorgehoben werden, fehlt der Nachweis, ob auch die Anforderungen an ein viruzid wirkendes Händedesinfektionsmittel in der vorgegebenen Einwirkzeit erfüllt werden. Nachteilig ist auch, daß die wässrigen Lösungen, Pasten oder pumpfähige Dispersionen vor dem unmittelbaren Gebrauch aus vordosierten kristallinen Pulver, Granulaten, Perlen, Tabletten oder Brausetabletten durch Auflösen in vorgegebenen Wassermengen hergestellt werden müssen und nicht verbrauchte Mengen nur ca. 24h bei Raumtemperatur haltbar sind.

In WO 96 / 29868(5) wird ein Desinfektionsmittel zum Abtöten von Keimen beschrieben, das in praktisch wasserfreien Alkohol 0,5 bis 3,0 Gew-% Wasserstoffperoxid enthält und zur bakterologischen Reinigung von industriellen Ausrüstungen wie Rohren, Leitungen, Reaktoren u.a. verwendet werden kann. Für die Herstellung der alkoholischen Lösung von Wasserstoffperoxid werden Ethanol, n-Propanol und Isopropanol oder Gemische dieser Alkohole verwendet Neben Wasserstoffperoxid werden als weitere Wirkstoffe Peressigsäure, Formaldehyd und Glutaraldehyd erwähnt.

Die beschriebenen Nachteile der potenziell viruzid wirkenden Peressigsäure haben die praktische Nutzung dieses Wirkstoffes im Bereich der Händedesinfektion bisher weitgehend verhindert. Dies wäre aber sehr wünschenswert, weil bisher kein Mittel auf anderer Wirkstoffbasis bekannt ist, das die Kriterien der DVV für viruzide Händedesinfektion erfüllt.

Aufgabe und Ziel war nun, ein Mittel zur viruziden Händedesinfektion auf Basis des omnipotenten Wirkstoffes Peressigsäure zu finden, welches die behördlichen Anforderungen hinsichtlich viruzider Wirksamkeit in der vorgegebenen Einwirkungszeit von einer Minute erfüllt und die galenischen Fortschritte hinsichtlich verbesserte Hautverträglichkeit und reduzierte Geruchsbelästigung von Peressigsäurezubereitungen in sich vereint.

Überraschenderweise wurde nun gefunden, daß mit Mitteln, deren Zusammensetzung Anspruch 1 bis 5 entspricht, das Ziel der Erfindung im vollen Umfang erreicht wird.

Die Vereinigung der Komponenten A und B zum viruziden Händedesinfektionsmittel unmittelbar vor dem Auftragen auf die Haut basiert auf der Erkenntnis, daß Peressigsäurezubereitungen, in denen 0.1-80% der insgesamt enthaltenen Peressigsäure in Form ihrer Ester mit zwei oder mehrwertigen Alkoholen vorliegen, durch Vermischung mit wässrigen Alkoholen in der für bakterizide Händedesinfektionsmittel üblichen Konzentration in überraschender Weise so aktiviert werden, daß hinsichtlich der Wirksamkeit die aufgabegemäßen Vorgaben erreicht werden.

Die aktivierenden Alkohol-Wasser-Gemische, Komponente A, enthalten Ethanol 70 bis 80%ig oder Isopropanol 50 bis 70%ig oder n-Propanol 50 bis 70%ig oder ein Gemisch dieser Alkohole.

Die viruzid wirkende Komponente B ist eine 20-30%ige Lösung von Glycerinmonoperacetatdiacetat und / oder Glycerinmonoperacetatacetat und / oder Glycolperacetatacetat, die als Reaktionsgemisch der Umsetzung von 90 bis 105 Gewichtsteilen 35-40%iger Peressigsäure mit 250 bis 300 Gewichtsteilen Glycerintriacetat und / oder Glycerindiacetat und / oder Glycoldiacetat entsteht.

Als Zusatzstoff werden dem Reaktionsgemisch 1-2 Gewichtsteile Harnstoff zur Stabilisierung zugesetzt. Die Herstellung der Komponente B erfolgte gemäß den Reaktionsbedingungen wie sie in

PS DD 282 644 Beispiel 1 und 2 beschrieben sind. Hierzu werden die vorstehenden Ausgangsstoffe vermischt und bei Temperaturen von 20-50 °C in Abhängigkeit von der Temperatur ein bis sechs Tage stehengelassen.

Neben den in PS DD 282 644 aufgeführten Ausgangsstoffen Glycerintriacetat und / oder Glycoldiacetat erfüllt auch das Umsetzungsprodukt von Glycerindiacetat mit 35-40 %iger Peressigsäure, das Glycerinmonoperacetatacetat, die Anforderungen, die an die viruzid wirkende Komponente B gestellt werden.

Mit dem neuen Mittel zur viruziden Händedesinfektion wurden die Nachteile des in PS DD 284 644 geschützten Mittel zur Abtötung von Bakterien, Pilzen, Viren und dergleichen abgestellt, ohne das deren vorteilhafte Eigenschaften gemindert werden. Insbesondere wird durch den Zusatz der Aktivierungskomponente A die Wirkungsverzögerung aufgehoben, welche durch die Veresterung der Peressigsäure mit Acetaten des Glycerins und / oder Glycols bedingt ist Andererseits ist die Stabilität und Haltbarkeit 20-30 %igen Lösungen von Peracetaten des Glycerins und / oder Glycols die Voraussetzung, daß die Komponenten A und B ohne nennenswerte Wirkungsverluste über längere Zeit getrennt aufbewahrbar sind und erst nach ihrer unmittelbaren Vereinigung vor der Benutzung innerhalb der vorgegebenen Einwirkungszeit von 60 sec die viruzide Wirkung voll eintritt. Außerdem tritt der starke Geruch wässriger Peressigsäuren nicht auf und die gute Hautverträglichkeit, welche der Komponente B zu eigen ist, bleibt erhalten.

Die Aktivierung der viruzid wirkenden Komponente B, wird vorzugsweise mit technischen Hilfsmitteln genügender Präzision realisiert. Hierzu werden die Komponenten A und B getrennt in einer Dosier- und Mischvorrichtung aufbewahrt und unmittelbar vor dem Auftragen auf die Hände vereinigt.

Von Vorteil ist weiterhin, daß das neue viruzide Händedesinfektionsmittel nach Bedarf und nur in den benötigten Mengen jederzeit und sofort aus den Komponenten A und B zubereitbar ist und damit keine Wirkungs- oder Zersetzungsverluste auftreten.

### Anwendungsbeispiel

Eine Wirkstoffzubereitung, Komponente B, entsteht durch Umsetzen von 105 Teilen einer 40%igen Peressigsäure mit 280 Teilen Glycerintriacetat und 1,5 Teilen Harnstoff während 70 bis 100 Stunden bei 40°C. Nach dieser Zeit hat der titrierbare Gehalt an Peressigsäure einen Wert um 10%. Davon liegen zwischen 20 und 30% in Form von Glycerinmonoperacetatdiacetat vor.

Der viruzide Effekt dieser Wirkstoffzubereitung als 2%ige wässrige Lösung, die 0.2% titrierbare Peressigsäure enthält, ist in der 1. Zeile der folgenden Tabelle am Beispiel der Inaktivierung des besonders resistenten Poliomyelitisvirus Typ 1 Mahoney in Abhängigkeit der Einwirkdauer dargestellt WZ steht für Wirkstoffzubereitung. Die WZ ist zwar viruzid, die erforderliche Reduktion des Virustiters um mindestens 4 log-Stufen ist erst nach 60 Minuten Einwirkzeit feststellbar.

Wird die WZ mit Ethanol 80% V/V, Komponente A, im gleichen Verhältnis verdünnt, tritt dadurch eine unerwartete Beschleunigung der Inaktivierung um den Faktor 60 auf. Die Titerreduktion um mindestens 4 log-Stufen wird innerhalb der für die hygienische Händedesinfektion praktisch verfügbaren Zeit sicher erreicht.

Der Vergleich mit Ethanol 80% V/V zeigt, daß auch hier erst nach 60 Minuten Einwirkzeit die notwendige Titerreduktion feststellbar ist und deshalb der viruzide Effekt des Gemisches im Rahmen der für die Händedesinfektion verfügbaren Zeit völlig unzureichend ist.

| Inaktivierung von Poliomyelitisvirus Typ 1 Stamm Mahoney im Suspensionsversuch Reduktion des Virustiters (log) nach Einwirkzeit | | | | | | | | |
|---|---|---|---|---|---|---|---|---|
| | 0,5 | 1 | 2 | 5 | 15 | 30 | 60 | min |
| 2% WZ in Wasser | 0 | 0,6 | 1,0 | 2,0 | 3,0 | 3,5 | **>4,0** | |
| 2% WZ in Ethanol | 3,0 | **>4** | | | | | | |
| Ethanol 80% V/V | 0 | 0 | 0,9 | 1,0 | 2,9 | 3,5 | **>4,0** | |

Das erfindungsgemäße Desinfektionsmittel erfüllt ebenfalls die Anforderungen der DGHM für Händedesinfektion bei einer Minute Einwirkzeit.

## Patentansprüche

1. Mittel zur viruziden Händedesinfektion
auf Basis von stabilen, geruchsarmen und hautverträglichen Peressigsäurezubereitungen, das aus den Komponenten A und B hergestellt wird, die unmittelbar vor der Anwendung des Mittels im Verhältnis 10 bis 50 Volumenteile Komponente A zu 1 Volumenteil Komponente B mittels einer Dosier- und Mischvorrichtung, vereinigt werden,
wobei die Komponente A aus einem 50- bis 80%igen flüssigen aliphatischen Alkohol oder Mischungen von flüssigen aliphatischen Alkoholen besteht,
und die Komponente B eine 20-30%ige Lösung von Glycerinmonoperacetatdiacetat und / oder Glycerinmonoperacetatacetat und / oder Glycolperacetatacetat ist, die als Reaktionsgemisch nach der Umsetzung von
- 90 bis 120 Gewichtsteilen 35- bis 40%iger Peressigsäure mit
- 250 bis 300 Gewichtsteilen Glycerintriacetat und / oder Glycerindiacetat und / oder Glycoldiacetat und als Zusatzstoff
- 1 bis 2 Gewichtsteilen Harnstoff
entsteht.

2. Mittel nach Anspruch 1, **dadurch gekennzeichnet, dass** die Komponenten A und B bevorzugt im Verhältnis 30:1 bis 50:1 gemischt werden.

3. Mittel nach Anspruch 1 und 2, **dadurch gekennzeichnet, dass** die Komponente A bevorzugt aus 70- oder 80%igem Ethanol oder 60- bis 70%igem Isopropanol oder 50- oder 60%igem n-Propanol oder Mischungen von diesen Alkoholen besteht.

4. Mittel nach Anspruch 1 und 2, **dadurch gekennzeichnet, dass** zur Herstellung der Komponente B bevorzugt 100 bis 105 Gewichtsteile 35- bis 40 %ige Peressigsäure eingesetzt werden.

5. Mittel nach Anspruch 1, 2 und 4, **dadurch gekennzeichnet, dass** zur Herstellung der Komponente B bevorzugt 270 bis 280 Gewichtsteile Glycerintriacetat und / oder Glycerindiacetat und / oder Glycoldiacetat eingesetzt werden.

6. Mittel nach Anspruch 1, **dadurch gekennzeichnet, dass** es zur Hände- und Hautdesinfektion verwendet wird.

## Claims

1. Product for virus-effective hand disinfections on basis of stable, skin tolerating peracetis acid preparations with slight odour only prepared out of components A and B being mixed just before application in a ratio of 10 to 50 parts by volume of component A and 1 part by volume of component B by means of a dosage and mixing device.
Component A consists of a 50 to 80% liquid aliphatic alcohol or mixtures of liquid aliphatic alcohols;
component B consists of a 20 to 30% solution of glycerine monoperacetate diacetate and/or glycerine monoperacetate acetate and/or glycol peracetate acetate formed as reaction mixture by the reaction of
- 90 to 120 parts by weight of 35 to 40% peracetic acid with
- 250 to 300 parts by weight of glycerine triacetate and/or glycerine diacetate and/or glycol diacetate and
- 1 to 2 parts by weight of urea as additive.

2. Product according to claim 1 **characterized by** a preferred mixing ratio of components A and B of 30 : 1 to 50 : 1.

3. Product according to claim 1 and 2 **characterized by** the fact, that component A consists preferably of 70 or 80 % ethanol or 60 to 70 % isopropanol or 50 or 60 % n-propanol or mixtures of the alcohols.

4. Product according to claim 1 and 2 **characterized by** the fact, that preferably 100 to 105 parts by weight of 35 to 40 % peracetic acid are used to prepare component B.

5. Product according to claim 1, 2 and 4 **characterized by** the fact, that preferably 270 to 280 parts by weight of glycerine triacetate and/or glycerine diacetate and /or glycol diacetate are used to prepare component B.

6. Application of the product according to claim 1 for virus-effective hand and skin disinfections.

## Revendications

1. Produit pour la désinfection virucide des mains à confectionner à la base des préparations d'acide peracétique étant stables, d 'odeur minime et étant douce à la peau. Ce produit est fait des composantes A et B qu'on réunit immédiatement avant son application, par l'intermédiaire d'un dispositif à dosage et à mélange, dans la proportion de 10 à 50 parties de volume de la composante A et d'une partie de volume de la composante B. A cela, la composante A consiste en un alcool liquide aliphatique de 50 à 80 % ou en mélanges d'alcools liquides aliphatiques,
et la composante B est une solution de 20 à 30 % de monoperacétate-diacétate de glycérine et/ou de monoperacétate-acétate de glycérine et/ou de peracétate-acétate de glycol. Cette solution se forme comme mélange de réaction après la transformation de
- 90 à 120 parties de poids d'acide peracétique de 35 à 40 %
avec
- 250 à 300 parties de poids de triacétate de glycérine et/ou de diacétate de glycérine et/ou diacétate de glycol et comme additif
- 1 à 2 parties d'urée.

2. Produit selon la prétention 1, caractérisé du fait que les composantes A et B sont mélangées de préférence dans la proprtion de 30 : 1 à 50 : 1.

3. Produit selon la prétention 1 et 2, caractérisé du fait que la composante A consiste de préférence en éthanol de 70 ou 80 % ou en isopropanol de 60 à 70 % ou en n-propanol de 50 ou 60 % ou en mélanges de ces alcools.

4. Produit selon la prétention 1 et 2, caractérisé du fait que pour la préperation de la composante B s'appliquent de préférence 100 à 105 parties de poids d'acide peracétique de 35 à 40 %.

5. Produit selon la prétention 1,2 et 4, caractérisé du fait que pour la préparation de composante B s'appliquent de préférence 270 à 280 parties de poids de triacétate de glycérine et/ou de diacétate de glycérine et/ou de diacétate de glycol.

6. Emploi du produit selon la prétention 1 pour la désinfection virucide des mains et de la peau.
